(19) Europäisches Patentamt
European Patent Office
Office européen des brevets

(11) Publication number: **0 128 739**
**B1**

(12) # EUROPEAN PATENT SPECIFICATION

(45) Date of publication of patent specification: 26.07.89

(51) Int. Cl.⁴: C 08 G 2/10, C 08 G 2/18

(21) Application number: 84303811.8

(22) Date of filing: 06.06.84

(54) **Method of manufacturing a homopolymer or copolymer of trioxane.**

(30) Priority: 08.06.83 JP 102500/83

(43) Date of publication of application:
19.12.84 Bulletin 84/51

(45) Publication of the grant of the patent:
26.07.89 Bulletin 89/30

(84) Designated Contracting States:
BE DE FR GB IT NL

(56) References cited:
FR-A-1 419 666
GB-A-2 030 576

PATENTS ABSTRACTS OF JAPAN, vol. 2, no. 144, 18 Nov 1978, p. 3261C78

(73) Proprietor: POLYPLASTICS CO. LTD.
30 Azuchimachi 2-chome
Higashi-ku Osaka-shi (JP)

(72) Inventor: Kasuga, Takuzo
16-7, Shimizu 2 chome
Suginami-ku Tokyo (JP)
Inventor: Asano, Takeshi
400-8, Morijima
Fuji-shi Shizuoka (JP)
Inventor: Ikenaga, Yukio
324, Miyashita
Fuji-shi Shizuoka (JP)
Inventor: Yamawaki, Masami
94-2, Gokanjima
Fuji-shi Shizuoka (JP)
Inventor: Takeda, Yasuyuki
885-1, Miyajima
Fuji-shi Shizuoka (JP)
Inventor: Ichimura, Koichi
52, Morishita
Fuji-shi Shizuoka (JP)

(74) Representative: Livsey, Gilbert Charlesworth Norris et al
HYDE, HEIDE & O'DONNELL 146 Buckingham Palace Road
London SW1W 9TR (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 128 739 B1

## Description

The present invention relates to an improved method of manufacturing homopolymers or copolymers of trioxane by polymerizing trioxane, or copolymerizing trioxane as the main ingredient with one or more comonomers which are copolymerizable with trioxane.

The method of manufacturing polyacetals by polymerizing trioxane or copolymerizing trioxane with cyclic ethers or cyclic formals such as ethylene oxide in the presence of cation-active catalysts for example boron trifluoride, is known and used in industry. However during such polymerization reactions the liquid monomers gradually solidify during the progress of polymerization, and during subsequent processing such as the separation of non-reacted monomers, washing of the polymer or copolymer product and the drying of the washed polymers or copolymers, the polymer products tend to decompose so that products or constant quality are not obtained. Furthermore the temperature of the reaction system during polymerization is controlled with difficulty so that temperature differences within the system tend to reduce the polymerization yield, and decomposition of the main molecular chains significantly reduce the average molecular weight of the resulting homopolymer or copolymer products. Although various kinds of polymerization apparatus designed to improve temperature distribution have been proposed, a satisfactory result has not hitherto been obtained.

It is known that polymers in particular polyacetal resins, can be stabilized by adding sterically-hindered phenols, which are antioxidants, to the polymer products, the mixture being subsequently melted to introduce some measure of dispersion of the said phenol. Usually the sterically-hindered phenols are added to the solid polymers after non-reacted monomers have been separated.

Japanese Patent Application JP—A—53 109 595 describes a process of homopolymerizing trioxane or copolymerising it with a cyclic ether having adjacent carbon atoms, in the presence of a cation-active polymerisation catalyst and in the presence of about 0.1 to 5.0 mol per 1000 mol of trioxane of a chain transfer agent constituted by a phenol. The chain transfer agent is said to facilitate production of a polymer of controlled molecular weight without lowering the yield, without prolonging the induction period of the copolymerisation of trioxane with acyclic ether, and without reducing the base stability of the polymer. The phenols proposed in the Japanese publication for use as the chain transfer agent include substituted as well as unsubstituted phenols but the publication indicates that it is preferable to avoid substituents which have more than a slight sterically hindering effect.

The present invention is based on the discovery that important advantages, in particular the production of polymers of higher average molecular weight (lower melt index), can be realised by carrying out the polymerisation in the presence of a substituted phenol if the phenol has a substituent or substituents having a significant sterically hindering effect and is used in an appropriate proportion relative to the monomer(s) to be polymerised.

This discovery is surprising because it was to be expected that significantly sterically-hindered phenols would have an inhibiting effect on the polymerisation reaction, and this is probably the reason for the prejudice against such phenols in the teaching of tqe aforesaid Japanese patent publication.

According to the present invention, there is provided a method of manufacturing a homopolymer or copolymer of trioxane comprising polymerising the monomer(s) with the aid of a cation-active catalyst and in the presence of a phenol, and separating the formed polymer, characterised in that the phenol is a substituted phenol which is used in a proportion of from 0.001 to 2.0% by weight based on the total weight of the monomer(s) to be polymerised and which adjacent the or at least one phenyl hydroxyl group has (a) substituent(s) having such sterically hindering effect that the presence of the phenol enables a polymer of higher average molecular weight to be produced by the method and the phenol becomes uniformly distributed in the polymer in course of the polymerisation.

It has been found that the presence of a sterically-hindered phenol in accordance with the present invention as above defined has the effect of reducing fracture of molecular chains so as to increase the average molecular weight of the polymer product; moreover polymer degradation during the course of the polymerisation reaction is prevented or reduced so that the yield of polymerisation is actually increased.

When performing a method according to the invention, the sterically-hindered phenol becomes uniformly distributed in the polymeric reaction product. And a further advantage of the invention is that polymeric reaction products produced by the method, if subjected to low temperature processes such as treatment under normal or reduced pressure in a stream of nitrogen or air to evaporate and separate residual monomers, or rinsed with water or organic solvents or separate monomers and then dried, show themselves to be relatively stable in comparison with reaction products produced by the same method but in the absence of the sterically-hindered phenol, and even in comparison with such products into which a sterically-hindered phenol has been incorporated after the polymerisation reaction. The stabilisation advantage tends to be greater, the greater is the amount of phenol used, within the aforesaid range of 0.001 to 2.0% by weight.

Examples of phenols exhibiting an adequate degree of steric hindrance are given below. The preferred phenols have at least one sterically hindering substituent containing at least four carbon atoms, adjacent the or at least one phenyl hydroxyl group. The most preferred phenols have two sterically hindering substituents, each containing at least four carbon atoms, adjacent the or each phenyl hydroxyl group. The preferred categories of phenols include those wherein a sterically hindering t-butyl group and/or a

substituted or unsubstituted aryl group is present adjacent the or at least one phenyl hydroxyl group, e.g. various sterically hindered bis-phenols.

The following are examples of sterically hindered phenolic compounds, which can be used in a method according to the invention:

2,2′-methylenebis(4-methyl-6-t-butyl-phenol),
hexamethylene glycol bis(3,5-di-t-butyl-4-hydroxyhydrocinnamate),
tetrakis[methylene(3,5-di-t-butyl-4-hydroxyhydrocinnamate)]methane,
triethylene glycol bis-3-(3-t-butyl-4-hydroxy-5-methyl-phenyl)propionate,
1,3,5-trimethyl-2,4,6-tris(3,5-di-t-butyl-4-hydroxybenzyl)benzene,
n-octadecyl-3-(4′-hydroxy-3′,5′-di-t-butylphenyl)propionate,
4,4′-methylenebis(2,6-di-t-butylphenol),
4,4′-butylidenebis(6-t-butyl-3-methylphenol),
2,2′-thiodiethylbis[3-(3,5-di-t-butyl-4-hydroxyphenyl)]propionate,
distearyl-3,5-di-t-butyl-4-hydroxybenzyl phosphonate,
2-t-butyl-6-(3-t-butyl-5-methyl-2-hydroxybenzyl)-4-methylphenyl acrylate.

One or more of these compounds may be used in any given performance of the method. The foregoing listed compounds are examples only. Other sterically hindered phenols of similar kind are effective. Particularly effective among them are:

hexamethylene glycol (3,5-di-t-butyl-4-hydroxyhydrocinnamate),
e.g. Irganox® 259 (a product of CIBA-GEIGY);
tetrakis[methylene(3,5-di-t-butyl-4-hydroxyhydrocinnamate)] methane,
e.g. Irganox® 1010 (a product of CIBA-GEIGY); and
triethylene glycol bis-3-(3-t-butyl-4-hydroxy-5-methylphenyl)propionate,
e.g. Irganox®245 (a product of CIBA-GEIGY).

The small amount of sterically hindered phenol (0.001 to 2.0% by weight based on the total amount of monomer(s) to be polymerised) can be added to the monomer(s) prior to or at the same time as the polymerisation catalyst. The phenol is preferably used in an amount within the range from 0.005 to 1.0% by weight. The addition of too small an amount of the phenol naturally has only a negligible effect, while the use of too much phenol tends to retard the polymerization reaction and is uneconomical. If the sterically hindered phenol is used only for its effect on the polymerization reaction, very small amounts within the aforementioned range of 0.001 to 2.0% will suffice, but relatively large amounts of phenol within that range may be used if it is desired to improve the stability of the polymer under stringent conditions to which it may be exposed after its formation.

As for the method of adding the sterically hindered phenol to the monomer(s), it may be dissolved directly in the liquid monomer(s), or a solution of the phenol in a small amount of a solvent which is inert to the polymerization may be added to the monomer(s). In the case of continuous polymerization, the phenol may be continuously fed into the monomer line leading to the polymerizer, so that the phenol becomes mixed with and dissolved in the monomer(s) feeding to the polymerizer, or the phenol may be added to and dissolved in the monomer(s) in its (their) storage tank(s).

As the polymerization catalysts employed in excerising the method of this invention, any well known cation-active catalyst which is generally used for polymerization of trioxane, etc., may be chosen. Examples of such catalysts are:' Lewis acids including, especially, halides of boron, tin, titanium, phosphorus, arsenic and antimony, e.g., boron trifluoride, tin tetrachloride, titanium tetrachloride, phosphorus pentachloride, phosphorus pentafluoride, arsenic pentafluoride and antimony pentafluoride and their complex compounds or salts; protonic acids, e.g., perchloric acid; protonic acid esters, particularly those of perchloric acid with lower aliphatic alcohols, e.g., t-butyl perchlorate; protonic acid anhydrides, particularly mixed anhydrides of perchloric acid and lower aliphatic carboxylic acids, e.g. acetyl perchlorate; trimethyloxonium hexafluorophosphate, triphenylmethyl hexafluoroarsenate, acetyl tetrafluoroborate, acetyl hexafluorophosphate and acetyl hexafluoroarsenate. Particularly preferred polymerization catalysts are boron trifluoride, boron trifluoride diethyletherate, boron trifluoride di-n-butyl etherate, triethyloxonium tetrafluoroborate, etc.

By the method of this invention, trioxane may be copolymerized with at least one comonomer which is polymerizable therewith. Such comonomers include those which form polymers having branched or reticulated structure in their molecules. Examples of such comonomers are 4-phenyldioxolane, propylene oxide, phenoxypropene oxide, and cyclic ethers represented by the formula:

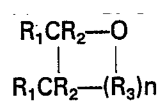

(where $R_1$ and $R_2$ each stands for hydrogen, lower alkyl or lower halogen-substituted alkyl group; $R_3$ is methylene, oxymethylene, lower alkyl- or halogenoalkyl-subsituted methylene, or lower alkyl- or halogenoalkyl-substituted oxymethylene group and n represents 0 to 3), e.g. epichlorohydrin, ethylene oxide, 1,3-dioxolane, diethyleneglycolformal, 1,4-butanediolformal, and 1,3 - dioxane.

Also cyclic esters such as β-propiolactone and vinyl compounds such as styrene or acrylonitrile can be

used. In addition, said comonomers producing polymers having branched structures or reticulated structures include alkyl-mono (or di)-glycidylethers (or formals) such as methylglycidylformal, ethylglycidylformal, propylglycidylformal, butylglycidylformal, ethyleneglycoldiglycidylether, triethyleneglycoldiglycidylether and (1,2,6-hexanetriol) triformal.

In the performance of a method according to the present invention a conventional chain transfer agent such as a low molecular weight acetal can be used in addition to a sterically hindered phenol, for regulating the molecular weight of the polymer.

Various kinds of polymerization apparatus can be used in carrying out the present invention, e.g. cokneaders, twin-screw type continous extrusion mixers, twin-paddle type continuous mixers and other known trioxane-polymerization apparatus. Also a combination of two or more kinds of polymerization apparatus can be used.

The method according to the present invention is effective in preventing degradation of the polymer even if the polymerization temperature is not sufficiently controlled and in consequence solid lumpy products are formed and the reaction is continued for a longer time in order to increase the polymerization yield; also in preventing degradation in the event that temperature regulation is difficult because large-sized polymerization apparatus is used.

As already indicated, the sterically hindered phenol can have a beneficial effect during treatments of the formed polymer in which the phenol is distributed. The phenol, if present in sufficient quantity within the specified range of 0.001 to 2.0% by weight, reduces decomposition and reduction of the molecular weight of the formed homo- or co-polymer not only during heating at temperatures of 130°C or less under normal or reduced pressure, but also during treatment of the formed polymer in a stream of nitrogen or air to evaporate and remove unreacted trioxane after the polymerization has been terminated by the addition of catalyst-deactivators e.g. amines; and during drying of the polymer at temperatures of 130°C or less after washing with water or organic solvents containing catalyst-deactivators so as to separate unreacted monomer(s). Such treatments should be carried out at temperatures of 130°C or less in order to prevent melting of the polymerization reaction products. Within this constraint such post-treatment processes can nevertheless be carried out under more severe conditions of temperature than would be possible were the polymerization processes to be performed in the absence of the sterically hindered phenols. It is considered that this is due to the uniform dispersion of the phenols in the polymerization process and subsequently in the polymerization product. In various tests following rinsing of the formed polymer, the phenol remained substantially in the polymer. The presence of phenol in the rinsing solution was hardly detectable. It is in practice not possible to obtain uniform dispersion of the phenols within the polymer products unless they are incorporated in the monomer(s) before or at the commencement of the polymerization, even when the phenols are use in relatively large amounts. If the phenols are added at a later stage, their effects are markedly inferior.

The invention is hereinafter illustrated by certain specific Examples and Comparative Examples wherein percentages and ppm are expressed by weight.

Yield of polymerization is expressed as the amount of the polymer, which is obtained after all post-treatment processes, expressed as a percentage by weight of the total amount of monomers fed to the polymerisation reactor.

Melt Index (MI) is measured at 190°C (g/10 min). The Melt Index is indicative of the molecular weight of the formed polymer. The lower the MI, the higher the molecular weight. (Stabilizer is added in a proportion of about 1% in order to prevent decomposition during measurement of the MI).

Alkali-decomposition rate: This rate is expressed in terms of the percentage of formaldehyde (based on the amount of the polymer) which was dissolved in the solution after heating 1g of the polymer in 100 ml of a 50%—aqueous solution of methanol containing 0.5% of ammonium hydroxide, at 180°C for 45 min. in a closed vessel.

Heating weight reduction: This is the percentage reduction in weight of the polymer determined by mixing 5g of the crushed polymer with a stabilizer powder consisting of 0.5% of 2,2′-methylenebis (4 - methyl - 6 - t - butylphenol) and 0.1% dicyandiamid and heating the resulting mixture at 220°C for 45 min.

Example 1 and comparative example 1

Hexamethyleneglycol-bis(3,5-di-t-butyl-4-hydroxy-hydrocinnamate) (Irganox® 259 made by Ciba Geigy Ltd.) was added to 200 g trioxane in a closed autoclave equipped with a jacket for the circulation of a heating medium and with stirring blades and the mixture was stirred. The weight ratio of the phenol to the trioxane was 0.01%. Then a solution of boron trifluoride ethyletherate in cyclohexane (amount of boron trifluoride 40 ppm based on trioxane) was added to the mixture to start the polymerization. The internal temperature of the autoclave was kept to about 70°C by passing hot water at 70°C through the autoclave jacket. After 5 min., 300 g of water containing 0.1% tributylamine was introduced into the autoclave to stop the reaction. The polymer was removed and crushed to particles of 20 mesh (sieve opening=0.841 mm) or less in size. After rinsing with acetone the crushed polymer was tested to determine the yield of polymerization and the MI (Example 1). In a comparative test, the procedures of Example 1 were repeated except that the hexamethyleneglycol - bis(3,5 - di - t - butyl - 4 - hydroxyhydrocinnamate) was omitted (Comparative Example 1). The results are shown in Table 1.

TABLE 1

| | Yield of polymerization | MI |
|---|---|---|
| Example 1 | 85% | 5.4 |
| Comparative example 1 | 81% | 7.8 |

It appears from Table 1 that both a higher yield of polymerization and a higher molecular weight were achieved when hexamethyleneglycolbis(3,5 - di - t - butyl - 4 - hydroxyhydrocinnamate) was added prior to the polymerization.

Example 2 and comparative example 2

The procedures of Example 1 were repeated except that 1,3-dioxolane in an amount of 4% by weight based on the weight of the trioxane was introduced into the autoclave, as well as the trioxane; boron trifluoride was used as the catalyst in an amount of 60 ppm, and the hexamethyleneglycol - bis(3,5 - di - t - butyl - 4 - hydroxyhydrocinnamate) was used in an amount of 0.8% of the total weight of the monomers to be copolymerised (Example 2). In a comparative test, the procedures of Example 2 were repeated except that the sterically hindered phenol was omitted (Comparative Example 2). The results are shown in Table 2.

TABLE 2

| | Yield of polymerization | MI | Alkali-decomposition rate | Heating weight reduction rate |
|---|---|---|---|---|
| Example 2 | 68% | 5.2 | 3.8% | 3.2% |
| Comparative example 2 | 64% | 8.1 | 5.1% | 5.5% |

Example 3 and comparative example 3

Trioxane and ethylene oxide in a weight ratio of 100:2.5, and an amount of tetrakis[methylene(3,5 - di - t - butyl - 4 - hydroxyhydrocinnamate)] methane (Irganox®1010 manufactured by Ciba Geigy Ltd.) equal to 0.05% by weight based on the total weight of the trioxane and ethylene oxide were continuously fed at a rate of 10 kg/hr into a reactor in which the contents were continuously mixed. A solution of boron trifluoridebutyletherate in cyclohexane was simultaneously fed into the reactor at a rate corresponding to 60 ppm of the boron compound based on the total weight of the trioxane and ethylene oxide. The reactor, which had an effective length of 1.3 m, comprised a barrel casing having a jacket for the passage of a heating medium therethrough, and housing two parallel rotors 80 mm in diameter, with intermeshing paddle blades. The aforesaid materials constituting the feedstock were fed into the reactor through one end thereof and hot water at 80°C was circulated through the heating jacket. The rotors were continuously rotated in opposite directions at a speed of 100 rpm. The reaction mixture, which was discharged from the opposite end of the reactor, was immediately put in water containing 0.1% tributylamine. The resulting mixture was stirred for 1 hour at 80°C. After removal of the liquid phase, the solid phase was dried at 130°C for 2 hours (Example 3). In a comparative test, Example 3 was repeated except that the tetrakis [methylene(3,5 - di - t - butyl - 4 - hydroxyhydrocinnamate)] methane was omitted (Comparative Example 3). The results are shown in Table 3.

TABLE 3

| | Yield of polymerization | MI | Alkali-decomposition rate | Heating weight reduction rate |
|---|---|---|---|---|
| Example 3 | 71% | 4.6 | 1.9% | 1.7% |
| Comparative example 3 | 68% | 6.1 | 2.9% | 3.1% |

Example 4 and comparative example 4

Polymerization reactions were carried according to Example 3 and Comparative Test 3. In each case, the polymerization reaction mixture discharged from the polymerization reactor was immediately

transferred into another reaction vessel kept at 80°C, in which the polymerization reaction was continued for a further 10 minutes. Then the reaction mixture was put in water containing 0.1% tributylamine. The resulting polymerization products were washed, dehydrated and dried with air at 70°C overnight. The results are shown in Table 4.

TABLE 4

| | Yield of polymerization | MI | Alkali-decomposition rate | Heating weight reduction rate |
|---|---|---|---|---|
| Example 4 | 96% | 6.4 | 3.2% | 2.8% |
| Comparative example 4 | 92% | 9.1 | 5.1% | 5.3% |

Example 5 and comparative example 5

Example 4 and Comparative Test 4 were repeated except that instead of putting the reaction mixture in water, it was mixed with a small quantity of a 1% solution of tributylamine (as catalyst inhibitor) in cyclohexane which was then kept at 90° to 200°C and under a pressure of 26.7 to 40 kPa (200 to 300 mmHg) until almost all of the unreacted monomers were removed. The results are shown in Table 5.

TABLE 5

| | Yield of polymerization | MI | Alkali-decomposition rate | Heating weight reduction rate |
|---|---|---|---|---|
| Example 5 | 96% | 6.8 | 3.7% | 3.8% |
| Comparative example 5 | 93% | 9.5 | 6.8% | 6.1% |

**Claims**

1. A method of manufacturing a homopolymer or copolymer of trioxane comprising polymerising the monomer(s) with the aid of a cation-active catalyst and in the presence of a phenol, and separating the formed polymer, characterised in that the phenol is a substituted phenol which is used in a proportion of from 0.001 to 2.0% by weight based on the total weight of the monomer(s) to be polymerised and which adjacent the or at least one phenyl hydroxyl group has (a) substituent(s) having such sterically hindering effect that the presence of the phenol enables a polymer of higher average molecular weight to be produced by the method and the phenol becomes uniformly distributed in the polymer in course of the polymerisation.

2. A method according to claim 1, characterised in that the phenol is a sterically hindered phenol having adjacent the or at least one phenyl hydroxyl group at least one sterically hindering substituent containing at least one tertiary butyl group.

3. A method according to claim 2, wherein the sterically hindered phenol is a bis-phenol.

4. A method according to any preceding claim, wherein the sterically hindered phenol is selected from:
2,2′-methylenebis(4-methyl-6-t-butylphenol),
hexamethyleneglycolbis(3,5-di-t-butyl-4-hydroxyhydrocinnamate),
tetrakis[methylene(3,5-di-t-butyl-4-hydroxy-hydrocinnamate)]methane,
triethyleneglycol-bis-3-(3-t-butyl-4-hydroxy-5-methylphenyl)propionate,
1,3,5-trimethyl-2,4,6-tris(3,5-di-t-butyl-4-hydroxy-benzyl)benzene,
n-octadecyl-3-(4′-hydroxy-3′,5′-di-t-butylphenyl) propionate,
4,4′-methylenebis(2,6-di-t-butylphenol),
4,4′-butylidene-bis-(6-t-butyl-3-methyl-phenol),
2,2′-thiodiethyl-bis-[3-(3,5-di-t-butyl-4-hydroxyphenyl)]propionate,
di-stearyl-3,5-di-t-butyl-4-hydroxybenzyl-phosphonate and
2-t-butyl-6-(3-t-butyl-5-methyl-2-hydroxybenzyl)-4-methylphenylacrylate.

5. A method according to any preceding claim, wherein said sterically hindered phenol is used in such an amount, within said range of 0.001% to 2% by weight based on the total weight of monomer(s) to be polymerised, that the presence of the phenol in the formed polymer improves the thermal stability of such polymer.

6. A method according to any preceding claim, wherein said phenol is used in an amount of from 0.005 to 1.0% by weight based on the total weight of the monomer(s) to be polymerised.

7. A method according to any preceding claim, wherein the trioxane is copolymerised with a co-monomer which is used in an amount of not more than 25% by weight based on the total weight of the monomers.

8. A method according to any preceding claim wherein the trioxane is copolymerised with 1,3-dioxolane, ethylene oxide or 1,4-butanediolformal.

9. A method according to any preceding claim, wherein the polymerisation is performed with the aid of a cation-active catalyst selected from: boron trifluoride, tin tetrachloride, boron trifluoride diethyletherate, boron trifluoride di-n-butyl etherate, and triethyloxonium tetrafluoroborate.

10. A method according to any preceding claim, wherein the said phenol is added to the monomer(s) at the same time as or before addition of the catalyst.

**Patentansprüche**

1. Verfahren zur Herstellung eines Homopolymers oder Copolymers von Trioxan, umfassend das Polymerisieren des Monomers (der Monomeren) mit Hilfe eines kationenaktiven Katalysators und in Gegenwart eines Phenols und das Abtrennen des gebildeten Polymers, dadurch gekennzeichnet, daß das Phenol ein substituiertes Phenol ist, das in einem Anteil von 0,001 bis 2,0 Gew.-%, bezogen auf das Gesamtgewicht des zu polymerisierenden Monomers (der zu polymerisierenden Monomeren), verwendet wird und das benachbart zu der oder wenigstens einer Phenyl-Hydroxy-Gruppe (a) einen (mehrere) Substituenten mit solchermaßen sterisch hindernder Wirkung aufweist, daß die Anwesenheit des Phenols die Herstellung eines Polymers mit höherem mittleren Molekulargewicht nach diesem Verfahren ermöglicht und das Phenol in dem Polymer im Laufe Polymerisation gleichmäßig verteilt wird.

2. Verfahren nach Anspruch 1, dadurch gekennzeichnet, daß das Phenol ein sterisch gehindertes Phenol ist, das benachbart zu der oder wenigstens einer Phenyl-Hydroxyl-Gruppe wenigstens einen sterisch hindernden Substituenten, der wenigstens eine tertäre Butyl-Gruppe enthalt, aufweist.

3. Verfahren nach Anspruch 2, worin das sterisch gehinderte Phenol ein Bis-phenol ist.

4. Verfahren nach irgendeinem vorhergehenden Anspruch, worin das sterisch gehinderte Phenol ausgewählt ist aus

2,2′-Methylen-bis(4-methyl-6-t-butylphenol),
Hexamethylen-glycolbis(3,5-di-t-butyl-4-hydroxyhydrocinnamat),
Tetrakis[methylen(3,5-di-t-butyl-4-hydroxyhydrocinnamat)]methan,
Triethylenglycol-bis-3-(3-t-butyl-4-hydroxy-5-methylphenyl)propionat,
1,3,5-Trimethyl-2,4-tris(3,6-di-t-butyl-4-hydroxybenzyl)benzol,
n-Octadecyl-3-(4′-hydroxy-3′,5′-di-t-butylphenyl)propionat,
4,4′-Methylen-bis(2,6-di-t-butylphenol),
4,4′-Butyliden-bis-(6-t-butyl-3-methylphenol),
2,2′-Thiodiethyl-bis-[3-(3,5-di-t-butyl-4-hydroxyphenyl)propionat,
Distearyl-3,5-di-t-butyl-4-hydroxybenzyl-phosphonat und
2-t-Butyl-6-(3-t-butyl-5-methyl-2-hydroxybenzyl)-4-methylphenylacrylat.

5. Verfahren nach irgendeinem vorhergehenden Anspruch, worin das sterisch gehinderte Phenol in einer solchen Menge, innerhalb des genannten Bereichs von 0,001 bis 2,0 Gew.-%, bezogen auf das Gesamtgewicht des zu polymerisierenden Monomers (der zu polymerisierenden Monomeren), verwerndet wird, daß die Anwesenheit des Phenols in dem hergestellten Polymer die thermische Stabilität eines solchen Polymers verbessert.

6. Verfahren nach irgendeinem vorhergehenden Ansprüche, worin das Phenol in einer Menge von 0,005 bis 1,0 Gew.-%, bezogen auf das Gesamtgewicht des zu polymerisierenden Monomers (der zu polymerisierenden Monomeren), verwendet wird.

7. Verfahren nach irgendeinem vorhergehenden Anspruch, worin das Trioxan mit einem Comonomer copolymerisiert wird, das in einer Menge von nicht mehr als 25 Gew.-%, bezogen auf das Gesamtgewicht der Monomeren, verwendet wird.

8. Verfahren nach irgendeinem vorhergehenden Anspruch, worin das Trioxan mit 1,3-Dioxolan, Ethylenoxid oder 1,4-Butandiolformal copolymerisiert wird.

9. Verfahren nach irgendeinem vorhergehenden Anspruch, worin die Polymerisation mit Hilfe eines kationenaktiven Katalysators durchgeführt wird, der ausgewählt ist aus Bortriflourid, Zinntetrachlorid, Bortrifluoriddiethyletherat, Bortrifluoriddi - n - butyletherat und Triethyloxonium-tetrafluoroborat.

10. Verfahren nach irgendeinem vorhergehenden Anspruch, worin das Phenol gleichzeitig mit oder vor der Zugabe des Katalysators zu dem Monomer (den Monomeren) hinzugefügt wird.

**Revendications**

1. Un procédé de fabrication d'un homopolymère ou copolymère de trioxanne, comprenant la polymérisation du ou des monomères à l'aide dun catalyseur cationique et en présence d'un phénol, et la séparation du polymère formé, caractérisé en ce que le phénol est un phénol substitué qui est utilisé en une proportion de 0,001 à 2,0% en poids par rapport au poids total du ou des monomères à polymériser et qui comporte un ou plusieurs substituants, adjacents au, ou à au moins un, groupe hydroxyle phénylique,

exerçant un effet d'empêchement stérique tel que la présence du phénol permette de produire un polymère de plus haut poids moléculaire moyen par le procédé et que le phénol vienne à être uniformément réparti dans le polymère au cours de la polymérisation.

2. Un procédé selon la revendication 1, caractérisé en ce que le phénol est un phénol à empêchement stérique comportant au moins un substituant d'empêchement stérique adjacent au, ou à au moins un, groupe hydroxyle phénylique, contenant au moins un groupe butyle tertiaire.

3. Un procédé selon la revendication 2, dans lequel le phénol à empêchement stérique est un bis-phénol.

4. Un procédé selon l'une quelconque des revendications précédentes, dans lequel le phénol à empêchement stérique est choisi parmi:

le 2,2'-méthylène-bis(4-méthyl-6-t-butylphénol),
le bis(3,5-di-t-4-hydroxyhydrocinnamate)d'hexaméthylèneglycol,
le tétrakis(3,5-di-t-butyl-4-hydroxyhydrocinnamate de méthylène)-méthane,
le bis-3-(3-t-butyl-4-hydroxy-5-méthylphényl)propionate de triéthylène-glycol,
le 1,3,5-triméthyl-2,4,6-tris(3,5-di-t-butyl-4-hydroxybenzyl)benzène,
le 3-(4'-hydroxy-3',5'-di-t-butylphényl)propionate de n-octadécyle,
le 4,4'-méthylène-bis(2,6-di-t-butylphénol),
le 4,4'-butylidène-bis(6-t-butyl-3-méthylphénol),
le bis[3-(3,5-di-t-butyl-4-hydroxyphényl)]propionate de 2,2'-thiodiéthyle,
le 3,5-di-t-butyl-4-hydroxybenzylphosphonate de distéaryle, et
l'acrylate de 2-t-butyl-6-(3-t-butyl-5-méthyl-2-hydroxybenzyl)-4-méthylphényle.

5. Un procédé selon l'une quelconque des revendications précédentes, dans lequel ledit phénol à empêchement stérique est utilisé en une proportion, comprise dans ledit intervalle de 0,001% à 2,0% en poids par rapport au poids total du ou des monomères à polymériser, telle que la présence du phénol dans le polymère formé améloire la stabilité thermique de ce polymère.

6. Un procédé selon l'une quelconque des revendications précédentes, dans lequel ledit phénol est utilisé en une proportion de 0,005 à 1,0% en poids par rapport au poids total du ou des monomères à polymériser.

7. Un procédé selon l'une quelconque des revendications précédentes, dans lequel le trioxanne est copolymérisé avec un comonomère qui est utilisé en une proportion non supérieure à 25% en poids par rapport au poids total des monomères.

8. Un procédé selon l'une quelconque des revendications précédentes, dans lequel le trioxanne est copolymérisé avec le 1,3-dioxolanne, l'oxyde d'éthylène ou le formal de 1,4-butanediol.

9. Un procédé selon l'une quelconque des revendications précédentes, dans lequel la polymérisation est exécutée à l'aide d'un catalyseur cationique choisi parmi: le trifluorure de bore, le tétrachlorure d'étain, le complexe d'éther diéthylique de trifluorure de bore, le complexe d'éther di-n-butylique de trifluorure de bore, et le tétrafluoroborate de triéthyloxonium.

10. Un procédé selon l'une quelconque des revendications précédentes, dans lequel ledit phénol est ajouté au ou aux monomères en même temps que ou avant l'addition du catalyseur.